# EUROPEAN PATENT APPLICATION

(11) **EP 3 816 218 A1**
(43) Date of publication of application: **05.05.2021**
(21) Application number: 19215620.6
(22) Date of filing: 12.12.2019
(51) Int. Cl.: C08K 3/22, H01B 3/44, H01B 7/29, H01B 9/00, C08K 3/26, C08K 3/38

(54) **A POLYMER-CERAMIC COMPOSITE AND METHODS OF MAKING THE SAME**

(30) Priority: 30.10.2019 US 201916668168
(71) Applicant: Hamilton Sundstrand Corporation, Charlotte, NC 28217-4578 (US)
(72) Inventor: WALSH, Peter J., Wethersfield, CT Connecticut 06109 (US); CORDATOS, Haralambos, Colchesster, CT Connecticut 06415 (US); HUGENER, Theresa A., Coventry, CT Connecticut 06238 (US)
(74) Representative: Dehns

(57) **Abstract**

Disclosed is a polymer-ceramic composite, comprising: ceramic particles (12) within a polymer matrix (14); wherein greater than or equal to about 70% of the ceramic particles by volume experience ceramic particle to ceramic particle contact; wherein a dielectric strength of the composite is greater than or equal to about 300 kilovolts per millimeter; and wherein a thermal conductivity of the composite is greater than or equal to about 10 watts per meter kelvin.

## Description

### BACKGROUND

Exemplary embodiments pertain to the art of polymer-ceramic composites, more particularly, to polymer-ceramic composites as insulation for high-voltage electrical cables.

Components aboard an aircraft can include high-voltage electrical cables. These cables are often insulated due to their high voltage (e.g., up to 10 kilovolts). For example, polymers are useful as electrical insulators because they often possess both high dielectric strength and robust mechanical strength (e.g., against fracture during bending and abrasion). However, high voltage electrical cables also produce excess heat. This excess heat will need to be conducted away from the cables to prevent failure. While polymers will satisfy insulation needs as discussed above, polymers often possess poor thermal conductivity (e.g., less than 0.3 watts per meter kelvin).

Therefore, there is a need to develop a mechanically robust, composite insulating material, with a balance of both high thermal conductivity and low electrical conductivity.

### BRIEF DESCRIPTION

Disclosed is a polymer-ceramic composite, comprising: ceramic particles within a polymer matrix; wherein greater than or equal to about 70% of the ceramic particles by volume experience ceramic particle to ceramic particle contact; wherein a dielectric strength of the composite is greater than or equal to about 300 kilovolts per millimeter; and wherein a thermal conductivity of the composite is greater than or equal to about 10 watts per meter kelvin.

Also disclosed is a high-voltage electrical cable, comprising: a metal wire; and an outer sheath surrounding the metal wire, wherein the outer sheath comprises the polymer-ceramic composite.

Also disclosed is a method of making the polymer-ceramic composite, the method comprising: dispersing polymer particles in an aqueous solution; mixing ceramic particles into the aqueous solution; drying the aqueous solution at a temperature of about 100°C to about 150°C; and compressing the dried solution at a temperature of about 250°C to about 350°C to produce the polymer-ceramic composite.

### BRIEF DESCRIPTION OF THE DRAWINGS

The following descriptions should not be considered limiting in any way. With reference to the accompanying drawings, like elements are numbered alike:
FIG. 1 is a cross-section of a polymer-ceramic composite according to an exemplary embodiment;
FIG. 2 is a cross-section of a polymer-ceramic composite and substrate according to an exemplary embodiment;
FIG. 3 is a cross-section of a high-voltage electrical cable according to an exemplary embodiment; and
FIG. 4 is a flow diagram representing a method of making a polymer-ceramic composite according to an exemplary embodiment.

### DETAILED DESCRIPTION

A detailed description of one or more embodiments of the disclosed composite and method are presented herein by way of exemplification and not limitation with reference to the Figures.

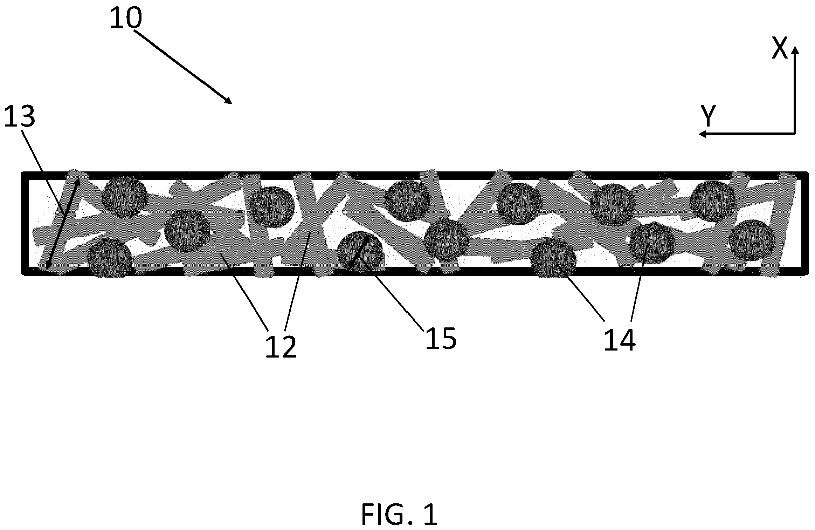

Referring to FIG. 1, a polymer-ceramic composite 10 can comprise ceramic particles 12 within a polymer matrix 14. Greater than or equal to about 50% of the ceramic particles by volume can experience ceramic particle to ceramic particle contact, for example, greater than or equal to about 70%, for example, greater than or equal to about 90%, for example, greater than or equal to about 95%. In other words, the polymer material of the matrix 14 does not completely surround each individual ceramic particle 12. Rather, there can be a high degree of contact between ceramic particles 12 within the polymer matrix 14 (e.g., as shown in FIG. 1). Not wishing to be bound by theory, this arrangement can result in robust mechanical characteristics for the composite 10, preserve a high thermal conductivity of the ceramic particles 12, and maintain a low electrical conductivity of both the ceramic particles 12 and the polymer matrix 14.

A dielectric strength of the composite 10 can be greater than or equal to about 300 kilovolts per millimeter, for example, greater than or equal to about 350 kilovolts per millimeter, for example, greater than or equal to about 400 kilovolts per millimeter. A dielectric strength of the composite 10 can be, for example, about 300 kilovolts per millimeter to about 400 kilovolts per millimeter. Here, dielectric can refer to an electrical insulator that can be polarized by an applied electric field. When a dielectric is placed in an electric field, electric charges do not flow through the material as they do in an electrical conductor but only slightly shift from their average equilibrium positions causing dielectric polarization. Dielectric strength can refer to the minimum applied electric field (i.e. the applied voltage divided by electrode separation distance) that results in electrical breakdown. Electrical breakdown can refer to the moment when current flows through an electrical insulator as the voltage applied across it exceeds the breakdown voltage. A breakdown voltage of an insulator is the minimum voltage that causes a portion of an insulator to become electrically conductive.

A thermal conductivity of the composite 10 can be greater than or equal to about 10 watts per meter kelvin, for example, greater than or equal to about 25 watts per meter kelvin, for example, greater than or equal to about 50 watts per meter kelvin, for example, greater than or equal to about 75 watts per meter kelvin, for example, greater than or equal to about 90 watts per meter kelvin, for example, greater than or equal to about 100 watts per meter kelvin. A thermal conductivity of the composite 10 can be, for example, about 10 watts per meter kelvin to about 100 watts per meter kelvin. Not wishing to be bound by theory, high thermal conductivity can drop an average temperature of the polymer-ceramic composite 10 and slow the onset of partial discharge failure.

The ceramic particles 12 of the composite 10 can comprise boron nitride, aluminum nitride, beryllium oxide, or any combination(s) thereof. For example, the ceramic particles 12 can comprise the hexagonal form of boron nitride. The polymer-ceramic composite 10 can comprise greater than or equal to 70% ceramic particles 12 by volume, for example, greater than or equal to 80% ceramic particles 12 by volume, for example, greater than or equal to 90% ceramic particles 12 by volume, for example, greater than or equal to 95% ceramic particles 12 by volume.

The polymer matrix 14 of the composite 10 can comprise fluoropolymer. The polymer matrix 14 can comprise, for example, perfluoroalkoxy alkane, polypropylene, polyethylene, polyvinylchloride, polytetrafluoroethylene, or any combination(s) thereof. For example, the polymer matrix 14 can comprise perfluoroalkoxy alkane. The polymer-ceramic composite 10 can comprise less than or equal to 30% polymer by volume, for example, less than or equal to 20% polymer by volume, for example, less than or equal to 10% polymer by volume, for example, less than or equal to 5% polymer by volume.

A morphology of the ceramic particles 12 can be a platelet, an agglomerate, a flake, or any combination(s) thereof. For example, an agglomerate can refer to two or more ceramic particles 12 combined together. A flake can refer to a portion of a ceramic particle 12 broken off from a larger ceramic particle 12. An average diameter 13 of the ceramic particles 12 can be about 50 nanometers to about 5000 nanometers. For example, an average diameter 13 of the ceramic particles 12 can be about 70 nanometers to about 80 nanometers, about 200 nanometers to about 800 nanometers, about 4000 nanometers to about 5000 nanometer, or any combination(s) thereof. An aspect ratio of the ceramic particles 12 can be about 1:1 to about 100:1, for example, about 10:1 to about 90:1, for example, about 20:1 to about 80:1, for example, about 30:1 to about 70:1, for example, about 40:1 to about 60:1. The size and shape of the ceramic particles 12 can be measured by any suitable method, for example, a method in accordance with ISO 13318:2001.

An orientation direction of the ceramic particles 12 can be parallel to a plane of the composite 10, perpendicular to a plane of the composite 10, random, or any combination(s) thereof. For example, an orientation direction that is parallel to a plane of the composite 10 can refer to orientation in the Y direction (as shown in FIG. 1) and can also be referred to as "in-plane" orientation. An orientation direction that is perpendicular to a plane of the composite 10 can refer to orientation in the X direction (as shown in FIG. 1) and can also be referred to as "out-of-plane" orientation. An orientation that is "random" can refer to a combination of parallel and/or perpendicular orientation directions.

The polymer-ceramic composite 10 can be anisotropic, or in other words, the composite 10 does not have identical property values in all directions. For example, not wishing to be bound by theory, the more ceramic particles 12 that are oriented in a perpendicular direction, the higher the thermal conductivity of the composite 10 along an "out-of-plane" orientation. This property is desirable in many applications, for example, cable insulation applications. For example, greater than or equal to 50% of the ceramic particles 12 by volume can be oriented in a direction perpendicular to a plane of the composite 10, for example, greater than or equal to 70%, for example, greater than or equal to 80%, for example, greater than or equal to 90%, for example, greater than or equal to 95%.

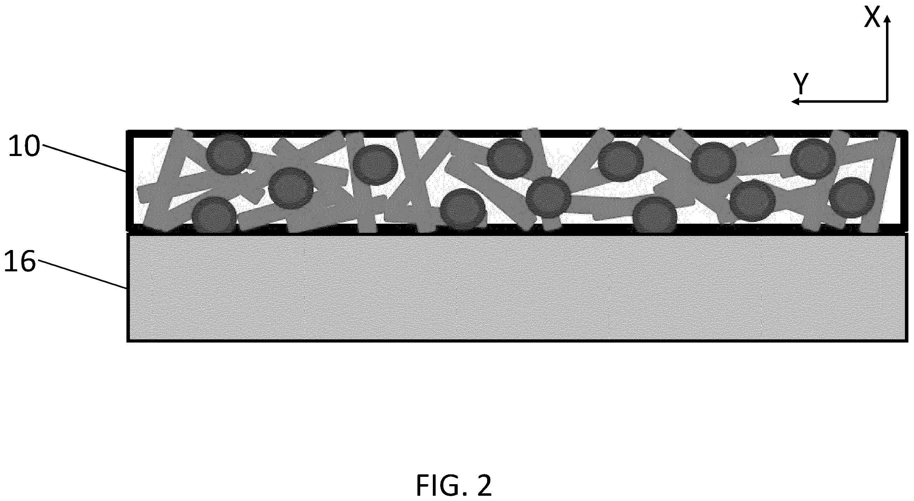

Now referring to FIG. 2, a substrate 16 can comprise the polymer-ceramic composite 10 deposited on a surface of the substrate 16. For example, the substrate 16 can be a component of an aircraft.

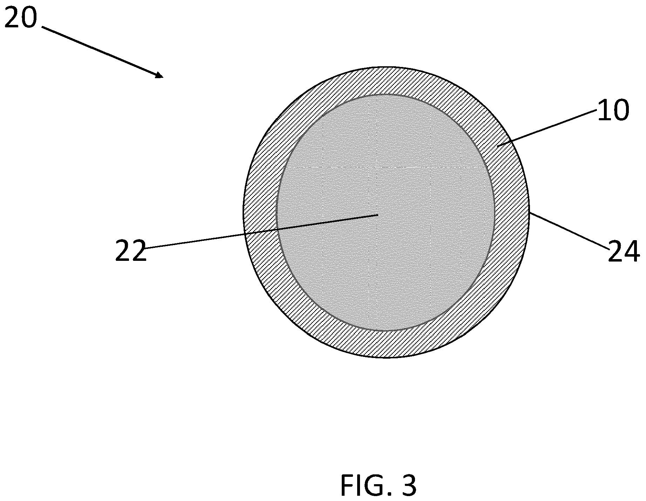

Now referring to FIG. 3, a high-voltage electrical cable 20 can comprise a metal wire 22 and an outer sheath 24 surrounding the metal wire 22, wherein the outer sheath 24 comprises the polymer-ceramic composite 10.

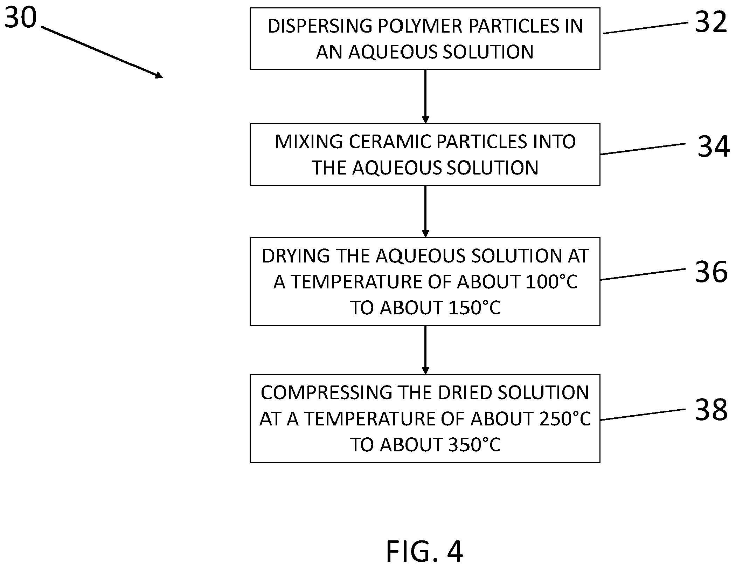

Now referring to FIG. 4, a method 30 of making the polymer-ceramic composite 10 can comprise step 32: dispersing polymer particles in an aqueous solution. For example, an average diameter 15 of the polymer particles 14 (e.g., as shown in FIG. 1) can be about 150 nanometers to about 250 nanometers, for example, about 200 nanometers. The size and shape of the polymer particles 14 can be measured by any suitable method, for example, a method in accordance with ISO 13318:2001. The method 30 can further comprise step 34: mixing ceramic particles into the aqueous solution. The method can further comprise step 36: drying the aqueous solution at a temperature of about 100°C to about 150°C, for example, about 120°C. The method can further comprise step 38: compressing the dried solution at a temperature of about 250°C to about 350°C, for example, about 290°C to about 310°C, for example, about 305°C, to produce the polymer-ceramic composite 10. A compressing time can be about 1 hour to 3 hours, for example, about 2 hours. Not wishing to be bound by theory, compression can minimize voids between particles within the composite 10, thus resulting in higher thermal conductivity and higher dielectric strength.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components (and encompasses "consist(s) of', "consisting of', "consist(s) essentially of' and "consisting essentially of'), but do not necessarily preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A polymer-ceramic composite (10), comprising:
ceramic particles (12) within a polymer matrix (14);
wherein greater than or equal to about 70% of the ceramic particles by volume experience ceramic particle to ceramic particle contact;
wherein a dielectric strength of the composite is greater than or equal to about 300 kilovolts per millimeter; and
wherein a thermal conductivity of the composite is greater than or equal to about 10 watts per meter kelvin.

2. The polymer-ceramic composite of Claim 1, wherein the ceramic particles comprise boron nitride, aluminum nitride, beryllium oxide, or any combination(s) thereof, or
wherein the ceramic particles comprise hexagonal boron nitride.

3. The polymer-ceramic composite of any preceding Claim, wherein the polymer matrix comprises fluoropolymer, or
wherein the polymer matrix comprises perfluoroalkoxy alkane, polypropylene, polyethylene, polyvinylchloride, polytetrafluoroethylene, or any combination(s) thereof.

4. The polymer-ceramic composite of any preceding Claim, wherein greater than or equal to about 90% of the ceramic particles by volume experience ceramic particle to ceramic particle contact.

5. The polymer-ceramic composite of any preceding Claim, wherein a dielectric strength of the composite is greater than or equal to about 400 kilovolts per millimeter.

6. The polymer-ceramic composite of any preceding Claim, wherein a thermal conductivity of the composite is greater than or equal to about 75 watts per meter kelvin.

7. The polymer-ceramic composite of any preceding Claim, wherein the composite comprises greater than or equal to 70% ceramic particles by volume, and/or wherein the composite comprises less than or equal to 30% polymer by volume.

8. The polymer-ceramic composite of any preceding Claim, wherein a morphology of the ceramic particles is a platelet, an agglomerate, a flake, or any combination(s) thereof, and/or wherein an orientation direction of the ceramic particles is parallel to a plane of the composite, perpendicular to a plane of the composite, random, or any combination(s) thereof.

9. The polymer-ceramic composite of any preceding Claim, wherein greater than or equal to 50% of the ceramic particles by volume are oriented in a direction perpendicular to a plane of the composite, and/or
wherein an average diameter of the ceramic particles is about 50 nanometers to about 5000 nanometers.

10. A high-voltage electrical cable, comprising: a metal wire; and an outer sheath surrounding the metal wire, wherein the outer sheath comprises the polymer-ceramic composite of any preceding Claim.

11. A substrate, comprising: the polymer-ceramic composite of any preceding Claim deposited on a surface of the substrate, wherein the substrate is a component of an aircraft.

12. A method of making the polymer-ceramic composite of any of claims 1 to 9, the method comprising:
dispersing polymer particles in an aqueous solution;
mixing ceramic particles into the aqueous solution;
drying the aqueous solution at a temperature of about 100°C to about 150°C; and
compressing the dried solution at a temperature of about 250°C to about 350°C to produce the polymer-ceramic composite.

13. The method of Claim 12, wherein an average diameter of the polymer particles is about 150 nanometers to about 250 nanometers.

14. The method of Claim 12 or 13, wherein a compressing temperature is about 290°C to about 310°C.

15. The method of any of Claims 12 to 14, wherein a compressing time is about 1 hour to 3 hours.
